(19) Europäisches Patentamt
European Patent Office
Office européen des brevets

(11) EP 0 601 765 B1

(12) **EUROPEAN PATENT SPECIFICATION**

(45) Date of publication and mention of the grant of the patent:
**30.07.1997 Bulletin 1997/31**

(51) Int Cl.[6]: **C08G 18/81**, C08G 18/10, C08F 299/06

(21) Application number: **93309536.6**

(22) Date of filing: **30.11.1993**

(54) **Radiation-curable polyurethane emulsion compositions**

Strahlenhärtbare Polyurethanemulsionszusammensetzungen

Compositions de polyuréthanne sous forme d'émulsion durcissables par irradiation

(84) Designated Contracting States:
**DE FR GB**

(30) Priority: **01.12.1992 JP 321632/92**

(43) Date of publication of application:
**15.06.1994 Bulletin 1994/24**

(73) Proprietor: **DAI-ICHI KOGYO SEIYAKU CO., LTD.**
**Shimogyo-ku Kyoto 600 (JP)**

(72) Inventors:
- **Sato, Kazuo**
  **Ohtsu-shi, Shiga 520 (JP)**
- **Sugimoto, Tadayuki**
  **Kyoto 606 (JP)**
- **Saiuchi, Naofumi**
  **Yashu-gun, Shiga 520-23 (JP)**

(74) Representative: **West, Alan Harry et al**
**R.G.C. Jenkins & Co.**
**26 Caxton Street**
**London SW1H 0RJ (GB)**

(56) References cited:
**EP-A- 0 209 684**
**DE-B- 2 536 678**
**US-A- 3 928 271**
**US-A- 4 012 349**

- **DATABASE WPI Week 7529, Derwent Publications Ltd., London, GB; AN 75-48215 & JP-A-49 099 194 (DAINIPPON INK. CHEM.)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 601 765 B1

## Description

This invention relates to radiation-curable polyurethane emulsion compositions that polymerize when irradiated with a variety of radiation.

Polyurethane resins have been used extensively as useful materials for adhesives, coating materials and modifiers. In recent years, synthetic resins in the form of water-soluble or water-based emulsions have attracted increasing interest since resins prepared in a solvent system release the solvent into the atmosphere to cause environmental contamination. In the field of polyurethane resins, therefore, water-soluble and water-based emulsions are increasingly used for adhesives and coatings in place of the conventional solvent-based systems, and further applications are constantly being considered. In short, the application of water-based polyurethane resins is expanding and will continue to expand in the future.

The water-soluble and water-emulsifiable polyurethanes in use include emulsions of thermoplastic polyurethanes of relatively high molecular weight mainly comprising straight-chain molecular structures. Such emulsions are prepared by introducing anionic, cationic or nonionic hydrophilic group into the urethane skeleton and causing self-emulsification or dispersion, or by adding an emulsifier to hydrophobic polyurethane resin to forcefully disperse the resin in water.

The use of radiation-curable resins, in which polymerization is induced by a variety of radiation such as ultraviolet and electron beam radiation, has been growing quickly in recent years, particularly in the coatings industry because such resins have the advantage that they can be processed without much energy, at low temperatures, and in a short time. In the art of such conventional radiation-curable resins, nonaqueous types are in the majority, and such radiation-curable resins are intended to be processable with less energy, at low temperatures, and in a short time. Hence their total constitution is of such resin components. Generally, however, such materials contain a radiation-curable resin of medium molecular weight, and a low molecular weight component comprising a large quantity of a monomer for adjusting the viscosity to improve the application properties or a so-called reactive thinner monomer. Reactive thinner monomers may include, for instance, vinyl acetate, vinylpyrrolidone and alkylacrylic ester.

Conventional water-soluble and water-based polyurethane emulsions, however, exhibit certain disadvantages. The polyurethane emulsions of the prior art are of straight-chain thermoplastic polyurethanes of relatively high molecular weight, and performance improvements are presently needed in, for example, their heat-stable adhesiveness, solvent resistance and chemical resistance. In order to improve various disadvantages of such conventional polyurethane emulsions, attempts have been made to add a variety of crosslinking agents, for instance melamines such as trimethylol melamine, epoxys, and blocked isocyanates. As a result, improvements to some properties have been made, yet their overall performance is still generally unsatisfactory. When such agents are added to cause crosslinking, it is necessary to use a processing temperature that is higher than that for the reactive crosslinking group itself. This, in turn, eliminates an advantage of the conventional polyurethane emulsions that they are able to form films and exhibit their physical properties at the temperature required for their drying.

Consideration of the heat resistance of the adherend limits the processing conditions and the scope of application. In short, satisfactory materials have not yet been developed. Such deficiencies in performance are mainly due to the fact that the polyurethane emulsions of the prior art lack a functional group which reacts with the crosslinking agents. In other words, modification of the conventional polyurethane emulsions by the use of these crosslinking agents is considered to be limited to a level of improvement in physical properties through entanglement like an interpenetrating polymer network (IPN) between the polyurethane resin and the self-polymerised product of the crosslinking agent.

It is therefore required to develop polyurethane emulsions which retain the merits of known polyurethane emulsions in that they are able to exhibit their physical properties when treated with energy just for drying, and which have a newly introduced function of forming a network structure for improving various disadvantages of the prior art. Also, radiation-induced setting resins of the prior art require the addition of 20 to 70 parts by weight of reactive thinner monomer of low molecular weight to the resin component of intermediate molecular weight in order to adjust the viscosity and the film thickness and the reactive thinner monomer poses problems with safe storage, toxicity and objectionable smells.

Furthermore, polymerization with a large quantity of such a reactive thinner monomer of low molecular weight poses the following problems:

(1) Most cured films or the adherends bear a smell specific to the resin, mainly the reactive thinner monomer component of the resin. These smells can prove to be very troublesome.
(2) The excellent film flexibility that can be obtained from the principal component or radiation-curable resin of intermediate molecular weight is badly impaired. This results in film brittleness, resulting in poor practical performance.
(3) The remarkable shrink caused by the reactive thinner monomer upon curing/polymerization, results in poor adhesion between the film and the material to be adhered.

To reduce or completely eliminate such disadvantages has yet to be achieved. One simple solution to the problem may be the addition of water to reduce the use of the reactive thinner monomer. The radiation-curable resins of the prior art, however, are insoluble in water. Hence, only a small quantity of water could be used and this does not constitute a solution to the problem. Hence it is necessary to develop a water-based system of radiation-curable resin as a chemical solution to the problem.

Japanese Laid-open Patent Publication No. SHO-62-22816 describes water-based ionomer urethane acrylate and its preparation developed with a view to overcoming this problem. In the first stage, a monohydroxyl compound containing the polymerizable unsaturated group is made to react with an organic polyisocyanate. The residual isocyanate groups are then made to react with a polyol. Next, an organic solvent such as acetone is added to the system, and carboxyl groups are introduced into the system by reaction with a mono-aminoalkyl carboxylic acid in water to effect conversion into salt. The product is then dispersed in water to make an emulsion. Finally, the organic solvent is recovered under reduced pressure. Ionomer urethane acrylate is prepared by this method.

This method generally has the following problems:

(1) After the polymerizable unsaturated group is made to react with the isocyanate group, the residual isocyanate group and the polyol need to be heated.

(2) After the emulsion has been produced, the solvent is recovered under reduced pressure and in the presence of water. During recovery, oxygen in the system which suppresses polymerization of the unsaturated group, is also removed.

The above processes subject the polymerizable unsaturated group introduced in the urethane skeleton to very unstable conditions. Such conditions tend to induce gelation due to polymerization of the unsaturated group, and pose a serious problem for industrial production. Moderation of the problem may be attempted by the use of a powerful inhibitor in common use, or a large quantity of an inhibitor. When such a method is used, the pclymerization velocity during processing with radiation will be reduced. This, in turn, will reduce the overall processing speed and pose a new problem.

The present invention attempts to solve such problems of the prior art, by prcviding radiation-curable polyurethane emulsion compositions which contain no solvent, and films obtained from which are not brittle and have a good adhesion.

Polyurethane emulsion compositions are obtained according to the present invention by adding an isocyanate compound having aliphatic unsaturated groups to an emulsion of a polyurethane having active amino groups, and causing them to react in the presence of water and at temperature ranging from 5 to 40°C.

The emulsion of polyurethane having active amino groups is obtained by emulsifying and dispersing in water a urethane prepolymer having terminal isocyanate groups, the prepolymer being obtained from reaction between a compound having two or more active hydrogens and an organic polyisocyanate, then adding a polyamine having at least two primary amino groups and at least one secondary amino group in the same molecule to the system so that the ratio of the number of moles of terminal isocyanate groups in the urethane prepolymer to the number of moles of primary amino groups in the polyamine is from 1/1 to 1/0.7, and allowing the system to react in the presence of water at a temperature from 5 to 40°C.

The isocyanate-group-containing compound having polymerizable unsaturated group may have in the same molecule, at least one group selected from acryloyl, allyl and styrene groups, and has at least one isocyanate group.

The ratio of the number of moles of the active amino groups in the polyurethane emulsion to the number of moles of isocyanate groups in the isocyanate compound may be from 1/1.05 to 1/0.8.

The emulsion of the polyurethane having active amino groups may be used, after any organic solvent contained in the emulsion has been removed, for the reaction with the isocyanate compound having polymerizable unsaturated groups.

The radiation-curable polyurethane emulsion compositions according to the present invention have the following features:

(1) The reaction between the emulsion of polyurethane having active amino groups and the isocyanate compound having polymerizable unsaturated groups makes it possible to introduce the polymerizable unsaturated group into the urethane skeleton. This reaction proceeds easily in the presence of water at low temperatures. Thus, the conventional reaction involving high temperatures is not required.

(2) The above method allows the reaction with the isocyanate compound having polymerizable unsaturated groups to take place, after any organic solvent used in the preparation of the polyurethane emulsion has been recovered, in the emulsion or in the presence of water. Thus, the method is free from the possibility of polymerization of the polymerizable unsaturated groups during production of water-based urethane acrylate, which is one of the problems of the prior art. The method does not need excessive use of an inhibitor. The method, therefore, is very

advantageous as an industrial production process. Moreover, the product has excellent curing properties in the application stage.

According to the present invention, then the isocyanate having polymerizable unsaturated groups is added to and reacted with the emulsion of the polyurethane having active amino groups, to obtain a radiation-curable polyurethane emulsion composition. The preparation of the emulsion of the polyurethane having active amino groups simplifies the introduction of the polymerizable unsaturated groups into the urethane skeleton. The emulsion of the polyurethane having active amino groups may be obtained by reaction between a urethane prepolymer having terminal isocyanate groups and a polyamine having, in the same molecule, at least two primary amino groups and at least one secondary amino group. The urethane prepolymer may be made in a system comprising a compound having two or more active hydrogens and excess organic polyisocyanate, in the presence or the absence of a solvent.

The compound having two or more active hydrogens may have in or at the terminals of its molecule, two or more hydroxyl groups, carboxyl groups, amino groups or mercapto groups. Such compounds include the well-known types of polyether, polyester, polyether ester, polythioether, polyacetal, polybutadiene and polysiloxane. Polyethers and polyesters both having two or more terminal hydroxyl groups are preferred. A preferable range of molecular weights of the above active hydrogen compounds is from 500 to 5,000. If necessary, glycols and triols of low molecular weight, such as 1,4-butanediol, 1,6-hexanediol, 3-methyl-1,5-pentanediol, ethylene glycol, butanediol, neopentyl glycol, diethylene glycol , trimethylol propane and cyclohexanedimethanol may also be used.

The organic polyisocyanate may be a conventional aromatic, aliphatic or alicyclic organic polyisocyanate. For example, it may be an organic polyisocyanates such as tolylene diisocyanate, diphenylmethane diisocyanate, naphthalene diisocyanate, xylylene diisocyanate, hexamethylene diisocyanate, dicyclohexylmethane diisocyanate, isophorone diisocyanate, hydrogenated xylene diisocyanate or tetramethylxylylene diisocyanate, or a mixture of any two or more thereof.

In consideration of the reaction between the urethane prepolymer and the polyamine after the prepolymer has been emulsified and dispersed in water (which is described below) of maintenance of the emulsified and dispersed state, and of storage stability, it is preferred to select the organic polyisocyanate from alicyclic polyisocyanates including dicyclohexylmethane diisocyanate, isophorone diisocyanate and hydrogenated xylylene diisocyanate or from organic polyisocyanates having tertiary isocyanate groups such as tetramethylxylylene diisocyanate. It is also desirable to mix such organic polyisocyanates with the above aromatic polyisocyanates including tolylene diisocyanate, diphenylmethane diisocyanate, naphthalene diisocyanate and xylylene diisocyanate, or with aliphatic polyisocyanates including hexamethylene diisocyanate.

The reaction between the compound having two or more active hydrogens and an excess quantity of the organic polyisocyanate is effected by the well-known one-stage or multi-stage polyaddition at temperatures ranging from 50 to 120°C.

In this reaction, if necessary, a reaction control agent such as phosphoric acid, adipic acid or benzoyl chloride, or a reaction catalyst such as dibutyltin dilaurate, stannous octoate or triethylamine may be added to the system. Furthermore, an organic solvent which does not react with isocyanate may be added during the reaction or after completion of the reaction. Such an organic solvent may be acetone, methyl ethyl ketone, tetrahydrofuran, dioxane, ethyl acetate, toluene or xylene.

According to the present invention, the polyurethane having active amino groups is used in the form of a water emulsion. Hence recovery of the solvent (which is described below) must be considered. With this recovery in mind, it is desirable to use acetone, methyl ethyl ketone or ethyl acetate as the solvent. When emulsification and dispersion of the urethane in water (which is described below) is also taken into consideration, it is desirable to use acetone or methyl ethyl ketone. Moreover, when control of the reaction between the emulsified and dispersed urethane prepolymer and the polyamine (which is described below) is taken into consideration, it is desirable to use ethyl acetate. Selection of such a solvent should preferably be made on a case-by-case basis.

If necessary, a stabilizer such as an antioxidant may be added to the system during the reaction or after completion of the reaction. A preferred antioxidant is a semicarbazide, since it causes relatively little harm to the curing properties of the final product or to the radiation-curing of the polyurethane emulsion.

The content of terminal isocyanate group in the urethane polymer obtained is preferably from 3.0 to 0.3 % by weight, particularly from 2.0 to 1.0 % by weight. If the content of terminal isocyanate groups is greater than 3.0 % by weight, the emulsified state will be lost at the time of the reaction with the polyamine and gelation will occur, or the product stability will be inadequate. If the content of terminal isocyanate groups is less than 0.3 % by weight, the quantity of the active amino groups to be introduced together with the polyamine will be small. As a result, the quantity of isocyanate having polymerizable unsaturated groups, which will be introduced in the reaction of the later process, will be reduced. This, in turn, will reduce the quantity of the polymerizable unsaturated group introduced into the urethane skeleton. Hence it will pose the problem that improved physical properties of the film, after radiation-induced curing of the polyurethane emulsion according to the present invention cannot be expected.

The prepolymer having terminal isocyanate groups is emulsified and dispersed in water. The following methods may be used to emulsify and disperse the prepolymer:

(1) During the stage of preparing the urethane prepolymer, carboxyl groups are introduced, in advance, into the molecule through a reaction between a polyol component having carboxyl groups such as dimethylol propionate and an organic polyisocyanate. Then, the carboxyl group is neutralized with a basic compound such as triethylamine, trimethylamine, diethanol monoethylamine, dimethyl ethanolamine, caustic soda or caustic potash to convert it into a carboxylate salt.
(2) During the stage of preparing the urethane prepolymer, an oxyethylene chain is included in advance into the molecule in an amount of 5 to 20 % by weight. Then, a nonionic surfactant having a hydrophilic-lipophilic balance value from 6 to 18 is added to and mixed with the urethane prepolymer at 50°C or less after the prepolymer has been prepared. In consideration of the emulsification and dispersion properties of the product and the water resistance of the final product film, the quantity of surfactant is preferably from 2 to 15 % by weight relative to the urethane prepolymer.
(3) After the preparation of the urethane prepolymer, the prepolymer is made to react with a water solution of the sodium salt or potassium salt of aminoethanesulfonic acid, aminoacetic acid, etc. corresponding to 50 to 5 %, preferably to 30 to 5% of the terminal isocyanate groups, at a temperature from 5 to 50°C, preferably from 20 to 40°C for 60 minutes.

After any of the above procedures (1), (2) and (3) water is added to the system and an emulsifying and dispersing apparatus such as a homomixer or homogenizer is used to effect emulsificaticn and dispersion. It is desirable to keep the emulsification and dispersion temperature at a low level, from 5 to 40°C, preferably from 5 to 30°C, and more preferably from 5 to 20°C so as to suppress reaction between the terminal isocyanate groups of the urethane prepolymer and the water.

Polyamine compounds to be used according to the invention may be compounds having, in the same molecule, at least two primary amino groups and at least one secondary amino group, for instance, diethylenetriamine and triethylenetetramine. The quantity of such polyamine compounds is determined so that the ratio of the number of moles of terminal isocyanates group of the urethane prepolymer to the number of moles of the primary amino groups of the polyamine is from 1/1 to 1/0.7. If the ratio is smaller than 1/1 (the number of primary amino groups is in excess), then effective increase in molecular weight will tend to be inhibited. If the ratio is greater than 1/0.7 then the quantity of the active amino groups introduced will be reduced and this will inevitably reduce the quantity of polymerizable unsaturated groups introduced in the next stage. Hence, the exhibition of physical properties of the emulsion composition according to the present invention will be decreased and increased viscosity and gelation of the emulsion composition will occur.

The above urethane prepolymer is emulsified and dispersed in water. Then the polyamine is added, and the terminal isocyanate group of the urethane prepolymer and the polyamine are made to react with each other in the emulsified and dispersed system. Tc make sure this reaction proceeds homogeneously, an emulsifying and dispersing apparatus such as homomixer or homogenizer is preferably used. In consideration of gelation that may be caused by breakdown of emulsification due to too rapid or localized reaction, and of product stability and secular stability, the reaction is suitably carried out at temperature from 5 to 40°C, preferably from 5 to 30°C, and more preferably from 5 to 20°C. The polyamine chain-lengthening reaction normally takes from 10 to 60 minutes.

According to the present invention, the primary amino groups in the polyamine (having a greater velocity of reaction with the isocyanate groups) are selectively involved in the chain-lengthening reaction. As a result, the position of the secondary amino groups in the polyamine is introduced into the polyurethane skeleton structure. In this way, there is produced the emulsion of the polyurethane having active amino group. If an organic solvent is included in the emulsified and dispersed system, it is distilled away under reduced pressure at a temperature from 30 to 70°C to obtain the emulsion of the polyurethane having active amino groups.

To suppress the side reaction between water and the isocyanate groups, and to promote the reaction between the isocyanate groups and the polyamine, phosphoric acid, hydrochloric acid or benzoyl chloride may be added.

The isocyanate having polymerizable unsaturated group may include, for example, products of addition reactions between ordinary organic polymers such as hexamethylene diisocyanate, xylylene diisocyanate, cyclohexyl methane diisocyanate, isophorone diisocyanate, tolylenediisocyanate, and diphenyl methane diisocyanate, or dimers or trimers thereof, and hydroxyl compounds having acryloyl groups such as hydroxyl methacrylate and hydroxyl acrylate and/or alkyleneoxide adducts of such compounds or allylalcohol and/or alkyleneoxide adducts of arylalcohol. Other examples include 2-methacryloyloxyethyl isocyanate as expressed by the structural formula 1, m-isopropenyl-alpha, alpha-dimethylbenzyl isocyanate (formula 2) and methacryloyl isocyanate (formula 3).

(1) 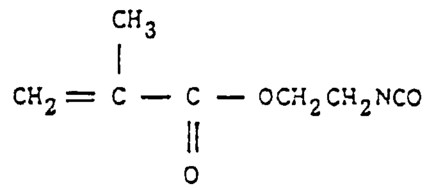

(2) 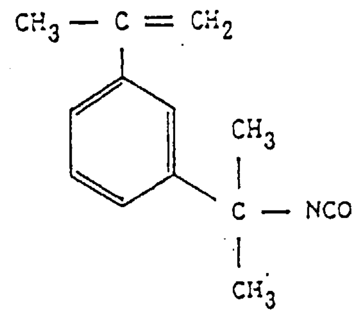

(3) 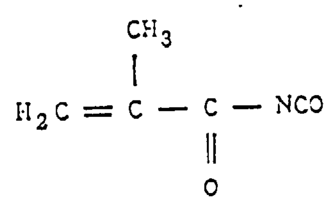

Such isocyanate compounds having polymerizable unsaturated groups are added, preferably dropwise, to the emulsion of the polyurethane having active amino groups obtained by the above process, and mixed together to react.

The addition reaction of the isocyanate having polymerizable unsaturated group to the emulsion of polyurethane having active amino groups is carried out at a temperature from 5 to 40°C, and preferably from 5 to 30°C, for 15 to 120 minutes. If the reaction temperature is below 5°C, the reaction between the active amino groups and the isocyanate compounds having polymerizable unsaturated groups will be slowed down, and a side reaction between the isocyanate compound having polymerizable unsaturated groups and water will occur. On the other hand, if the reaction temperature is above 40°C, a side reaction between the isocyanate compound having polymerizable unsaturated groups and water will be induced. As a result, the rate of reaction between the active amino groups and the isocyanate compound having polymerizable unsaturated groups will decrease. This will inevitably result in a decrease in the quantity of polymerizable unsaturated groups introduced into the urethane skeleton.

The addition of the isocyanate compound having polymerizable unsaturated groups is determined so that the ratio of the number of moles of active amino groups to the number of moles of isocyanate groups is from 1/1.05 to 1/0.8. If this ratio is smaller than 1/1.05 then free urea compounds having polymerizable unsaturated groups and amine compounds having polymerizable unsaturated groups will increase due to the reaction between the isocyanate compound and water. If the ratio is greater than 1/0.8, then the quantity of the polymerizable unsaturated groups will inevitably decrease, and the exhibition of the physical properties of the emulsion composition according to the present invention will decrease. Moreover, if a large quantity of active amino groups remains, then burn and yellowing of the cured film will intensify.

Through the above reaction, the active amino groups in the urethane skeleton of the polyurethane emulsion and the isocyanate group of the isocyanate compound having polymerizable unsaturated groups, react with each other and eventually the polymerizable unsaturated groups are introduced into the urethane skeleton. In this way, radiation-curable polyurethane emulsion compositions are obtained.

One advantage of the process of the present invention at the industrial level is that the process can easily introduce, with low energy, polymerizable unsaturated group into the urethane skeleton. This is advantageous since it eliminates the problem of gelation encountered with compounds having polymerizable unsaturated groups in the conventional procedures and ensures very stable production.

The production of radiation-curable polyurethane emulsion compositions according to the present invention is distinguished by the preparation of the emulsion of polyurethane having active amino groups and the use of that emulsion and the isocyanate compound having polymerizable unsaturated groups. The reaction between the emulsion of polyurethane having active amino groups and the isocyanate compound having polymerizable unsaturated groups may proceed, after recovery of organic solvent used in the preparation of the polyurethane having active amino groups, in the presence of water at relatively low temperatures. This enables simple introduction of polymerizable unsaturated groups into the urethane skeleton. Hence the problem of polymerization or gelation of polymerizable unsaturated group, which is encountered in the conventional processes requiring heating at high temperature, can be eliminated. One conventional means for moderating the polymerization or gelation of the polymerizable unsaturated group is excessive use of an inhibitor. Such an excess poses problems of decreased polymerization velocity and deficient polymerization upon irradiation. Such problems are eliminated by the procedure of the invention.

Since the radiation-curable polyurethane compositions according to the present invention are water-based emulsions, water may be used as an diluting medium. Hence, viscosity control and film thickness adjustment can be made with ease. This, in turn, eliminates the problems arising from the use of a reactive thinner monomer in combination with radiation-curing resins of the prior art. These problems include residual smell, after curing, specific to the monomer, and deficient adhesion to the adherent caused by cure shrinkage of the resin. The radiation-curable polyurethane emulsion compositions according to the present invention may be used in a wide range of applications such as fibers, knit fabrics, woven fabrics, nonwoven fabrics, wood, paper, leather, metal and plastics, and for impregnation and coating and as a vehicle for paint and ink.

When the hardness of the cured film needs to be increased, the radiation-curable polyurethane emulsion compositions of the present invention may be used with a water-soluble reactive thinner monomer. Such water-soluble reactive thinner monomers include, for example, diacrylates of dimethyl acrylamide, vinylpyrrolidone, ethylene glycol and diethylene glycol, and diacrylates of low-molecular-weight polyethylene glycol.

The radiation-curable polyurethane emulsion compositions according to the present invention may be used with other water-based resin emulsions. For instance, they may be used as modifiers together with ordinary polyurethane emulsions; emulsions of vinyl acetate, ethylene-vinylacetate copolymer and acrylic ester resin; natural rubber; synthetic rubber latexes of SBR and NBR. Furthermore, a system comprising the radiation-curable polyurethane emulsion compositions according to the present invention and the water soluble reactive thinner monomer may be added as a modifier to the above and other water-based resin emulsions.

The following Examples illustrate the invention. In the Examples, "parts" and "%" denote parts by weight and % by weight, except where otherwise indicated.

Example 1

350 parts of polyester polyol (butylene adipate; molecular weight: 2,000), 10.1 parts of trimethylol propane, 35 parts of polyethylene glycol (molecular weight: 600), 35 parts of PO(propyleneoxide)-/EO(ethyleneoxide) random copolymer polyether polyol (PO/EO = 30/70; molecular weight: 3,400), and 78.3 parts of 1,4-butanediol were added to and dissolved in 400 parts of methyl ethyl ketone. Then 310 parts of isophorone diisocyanate was added to the system at a temperature of 50°C. Then 0.05 part of dibutyltin dilaurate was added and the system was gradually heated to raise the temperature to 75°C. The system was allowed to react at 75°C for 60 minutes. Then 0.05 part of dibutyltin dilaurate was added. The reaction was allowed to continue at 75°C for 200 minutes. Then the system was cooled to bring the temperature down to 50°C. The free isocyanate content of the urethane prepolymer after cooling to 50°C was 2.0 % (relative to the solids content).

Next, at a temperature of 45°C, 80 parts of poly(oxyethylene) arylphenol ether type nonionic surfactant (HLB = 15), which is an ethylene oxide adduct of distyrene phenol, was added and the system was mixed for 10 minutes. Then, the contents were stirred at 3,000 r.p.m. with a homomixer. 1,300 parts of distilled water was added gradually to the system. After that, the system was emulsified at a temperature of 30°C for 20 minutes.

The temperature was lowered to 20°C, and a water solution of diethylene triamine was added. The solution was prepared by dissolving 18 parts of diethylene triamine in 130 parts of distilled water. Then the temperature was controlled in a range from 20 to 25°C, and the system was kept stirred at 3,000 r.p.m. with the homomixer for 60 minutes. Next, methyl ethyl ketone (being the solvent used) was recovered at reduced pressure (water bath temperature: 40°C) by means of an evaporator. An emulsion of a polyurethane having active amino groups was produced.

The emulsion so obtained was analyzed. The results are shown in Table 1. The quantity of active amino groups (amine value: referred to as "Am.V") was determined by titration with hydrochloric acid; 10 parts of the emulsion was stirred and dissolved in 300 parts of N-methyl-2-pyrrolidone, and brom phenol blue was used as the indicator.

Table 1

| | |
|---|---|
| Solids content | 40 % by weight |
| Am.V | 3.80 |
| Appearance | White liquid |

Next, 1,000 parts of the emulsion obtained as described above was kept at a temperature of 25°C and stirred at 1,000 r.p.m. with a homomixer. A solution prepared by dissolving 0.2 part of hydroquinone monomethyl ether into 2 parts of isopropyl alcohol was added. Then 10.2 parts of 2-methacryloyl oxyethyl isocyanate was gradually added to the system dropwise over ten minutes. After that, the system was stirred at 25°C until the measured value of the Am. V became steady.

Stirring eventually took 60 minutes and the Am.V reached 0.25 (for the entire system). This clearly indicates that the active amino groups in the polyurethane emulsion reacted with the isocyanate group of the 2-methacryloyl oxyethyl isocyanate. Thus, a radiation-curable polyurethane emulsion composition, wherein polymerizable unsaturated group were introduced into the polyurethane skeleton, was obtained. The emulsion composition was white and liquid, with solids content of 40.2 %.

Example 2

350 parts of polyether polyol (PO/EO copolymer, PO/EO = 90/10; molecular weight: 2,000), 15 parts of trimethylol propane, 30 parts of polyethylene glycol, 40 parts of PO/EO random copolymer polyether polyol (PO/EO = 30/70; molecular weight: 3,600), and 150 parts of cyclohexane dimethanol was dissolved in 400 parts of methyl ethyl ketone.

Next, 360 parts of isophorone diisocyanate was added to the system. Then 0.1 part of dibutyltin dilaurate was added at a temperature at 50°C, and the system was gradually heated to raise the temperature to 75°C. The system was allowed to continue to react at 75°C for 300 minutes. Then it was cooled to bring the temperature down to 50°C. The free isocyanate content of the urethane prepolymer after cooling to 50°C was 1.80 % (relative to the solids content).

Next, at a temperature of 40°C, 90 parts of the same poly(oxyethylene) arylphenol ether type nonionic surfactant (HLB = 15) as that of Example 1 was added to the system, and was mixed for 15 minutes. Then, the contents were stirred at 3,000 r.p.m. with a homomixer, and 1,690 parts of distilled water was added gradually. After that, the system was emulsified at a temperature of 25°C for 20 minutes.

Next, a water solution of diethylene triamine, which was prepared by dissolving 18.7 parts of diethylene triamine into 100 parts of distilled water, was added to the system with the temperature kept at 25° C. While the temperature was controlled in a range from 20 to 25°C, the system was kept stirred at 3,000 r.p.m. with the homomixer for 60 minutes.

Next, methyl ethyl ketone (being the solvent used) was recovered at reduced pressure (water bath temperature: 40°C) by means of an evaporator. As a result, an emulsion of a polyurethane having active amino groups was prepared. The emulsion so obtained was analyzed. The results are shown in Table 2. The quantity of active amino groups was determined by a method similar to that of Example 1.

Table 2

| | |
|---|---|
| Solids content | 38 % by weight |
| Am.V | 3.30 |
| Appearance | White liquid |

Next, 1,000 parts of the emulsion obtained as described above was kept at a temperature of 25°C and stirred at 1,000 r.p.m. with a homomixer. A solution prepared by dissolving 0.2 part of hydroquinone monomethyl ether in 2 parts of isopropyl alcohol was added. Then 9.0 parts of 2-methacryloyl oxyethyl isocyanate was gradually added to the system dropwise over ten minutes.

After that, the system was kept stirred at 25°C until the measured value of the Am.V became steady. Stirring eventually took 70 minutes and the Am.V reached 0.10 (for the entire system). This clearly indicates that the active amino groups in the polyurethane emulsion reacted with the isocyanate group of the 2-methacryloyl oxyethyl isocyanate. Thus, a radiation-curable polyurethane emulsion composition, wherein polymerizable unsaturated groups were introduced into the polyurethane skeleton, was obtained. The emulsion composition was white and liquid, with a solids content of 38.4 %.

Example 3

1,000 parts of the polyurethane emulsion having active amino groups prepared in Example 2 was kept at a temperature of 25°C, and stirred at 1,000 r.p.m. by a homomixer. A solution prepared by dissolving 0.2 part of hydroquinone monomethyl ether in 2 parts of isopropyl alcohol was added to the system and 19.5 parts of an isocyanate having polymerizable unsaturated group (1:1 mole ratio addition product of 2-hydroxyethyl acrylate and isophorone diisocyanate; isocyanate group content: 12.3 %) was gradually added.

After that, the system was stirred at 25°C until the measured value of the Am.V became steady. Stirring eventually took 120 minutes and the Am.V reached 0.15 (for the entire system). This clearly indicates that the active amino groups in the polyurethane emulsion reacted with the isocyanate group of the isocyanate.

Thus, a radiation-curable polyurethane emulsion composition, wherein polymerizable unsaturated groups were introduced into the polyurethane skeleton, was obtained. The emulsion composition was white and liquid, with a solids content of 39.0 %.

Comparative Example 1

A urethane prepolymer having 2% free isocyanate group was prepared in the manner described in Example 1. After that, the same emulsification as that described in Example 1 was carried out. A water solution of diethylene triamine was added in the same way, and the system was stirred by a homomixer in the same way as that of Example 1. As a result, an emulsion of polyurethane having active amino groups, which contained methyl ethyl ketone solvent, was prepared. The active amino group content was measured in the same manner as Example 1. The results are shown in Table 3.

Table 3

| | |
|---|---|
| Solids content | 33.0 % by weight |
| Am.V | 3.10 |
| Appearance | White liquid |

Next, 1,000 parts of the polyurethane emulsion having active amino groups, and containing the solvent used and having been obtained as described above, was kept at a temperature of 25°C and stirred at 1,000 r.p.m. with a homomixer. A solution prepared by dissolving 0.17 part of hydroquinone monomethyl ether in 1.7 parts of isopropyl alcohol was added. Then 8.4 parts of 2-methacryloyl oxyethyl isocyanate was gradually added dropwise. After that, the system was kept stirred at 25°C until the measured value of the Am.V became steady. Stirring eventually took 60 minutes and the Am.V reached 0.08. Next, with an evaporator, methyl ethyl ketone was recovered at reduced pressure (water bath: 40°C). The entire emulsion turned into a gel 20 minutes after the start of recovery.

Comparative Example 2

An emulsion of polyurethane having active amino group was prepared. The composition and the procedure were similar to those of Comparative Example 1 except the quantity of hydroquinone monomethyl ether was 0.68 part. The polyurethane emulsion containing the solvent was made to react with 2-methacryloyl oxyethyl isocyanate. After that, the methyl ethyl ketone was recovered at reduced pressure (water bath: 40°C) with an evaporator. The solvent was recovered without problems. As described above, when a polymerizable unsaturated group is introduced before recovering the solvent, and the solvent is recovered after the introduction, polymerization of the unsaturated group will be induced. It, therefore, is necessary to increase the usage of hydroquinone monomethyl ether being an inhibitor.

Comparative Example 3

Urethane prepolymer having 2% free isocyanate group was prepared in the same manner as Example 1. After that, the same emulsification as that described in Example 1 was carried out. In place of diethylene triamine, the same number of moles of ethylene diamine was added to the system and stirred. Next, with an evaporator, methyl ethyl ketone was recovered. As a result, a polyurethane emulsion according to the prior art was obtained. The analytical results of the polyurethane emulsion are shown in Table 4. As can be seen from the content of amino groups, the polyurethane emulsion of this Comparative Example scarcely has active amino group.

Table 4

| | |
|---|---|
| Solids content | 40 % by weight |
| Am.V | 0.10 |
| Appearance | White liquid |

Experiments 1 to 8

A photosensitizer of the formula 4 was added to and mixed with each of the radiation-curable polyurethane emulsions prepared in Examples 1 to 3 to prepare a film. Films to be used in the experiments were coated over Teflon® plates and dried at room temperature overnight. The films were further dried at 60°C for two hours. Then the films were irradiated with ultraviolet rays by means of a high pressure mercury lamp (radiation intensity: 80 W/cm; focal length: 8 cm) to effect photo-polymerization and prepare the films. The film thickness of each film was 200 µm.

(4)

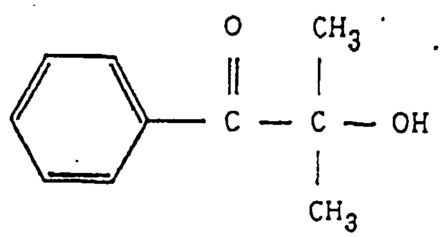

The physical properties of the cured films were measured. The results are shown in Table 5. Cases using no photosensitizer are also shown in Table 5. The photosensitizer was added in the form of a water solution of photosensitizer of formula 4/poly(oxyethylene) arylphenol ether type nonionic surfactant (HLB = 15)/water = 10 parts/8 parts/82 parts.

Table 5

| | Film | | | Physical Properties | | | | | |
|---|---|---|---|---|---|---|---|---|---|
| | Radiation-induced-setting polyurethane emulsion | Quantity of photo-sensitizer added (%) | Photo-cure speed (m/min) | Strength (kg/cm²) | Elongation (%) | 100 % MO (kg/cm²) | 200 % MO (kg/cm²) | solvent resistance (%) | water resistance (%) |
| Experiment 1 | Example 1 | 0 | 5 | 190 | 300 | 90 | 150 | 150 | 15 |
| Experiment 2 | Example 2 | 0 | 5 | 100 | 300 | 60 | 80 | 180 | 20 |
| Experiment 3 | Example 3 | 0 | 5 | 110 | 320 | 70 | 75 | 180 | 18 |
| Experiment 4 | Example 1 | 1 | 5 | 350 | 500 | 110 | 210 | 60 | 5 |
| Experiment 5 | Example 1 | 3 | 5 | 352 | 510 | 107 | 215 | 58 | 8 |
| Experiment 6 | Example 1 | 1 | 20 | 300 | 500 | 90 | 170 | 62 | 8 |
| Experiment 7 | Example 2 | 1 | 5 | 200 | 350 | 110 | 140 | 75 | 7.5 |
| Experiment 8 | Example 3 | 1 | 5 | 210 | 340 | 120 | 160 | 73 | 8.0 |
| Comparative Experiment 1 | Comparative Example 2 | 1 | 5 | 250 | 350 | 130 | 160 | 135 | 13 |
| Comparative Experiment 2 | Comparative Example 2 | 1 | 20 | 230 | 310 | 110 | 153 | 140 | 13 |

1) Quantity of photosensitizer used; Quantity of photosenstizer added (%) relative to the 100 % of the resin.

The photosensitizer used:

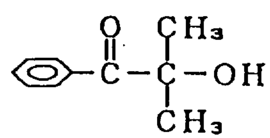

Comparative Experiments 1 and 2

A photosensitizer was added to the radiation-curable polyurethane emulsion obtained in Comparative Example 2

in the same manner as Experiments 1 to 8. Photo-polymerization was effected under conditions similar to those of Experiments 1 to 8. The physical properties of the cured films were measured. The results are shown in Table 5.

Of the physical properties shown in Table 5, strength, elongation, 100 % modulus (100 % MO) and 200 % modulus (200 % MO) were measured in accordance with JIS-K-6301 using a tensile tester (Shimazu Seisakusho, trade name "autograph"), at a stretching rate of 100 mm/min.

Solvent resistance was measured by immersing a film specimen measuring 2 cm X 4 cm in ethyl acetate/toluene = 1/1 at 20°C for 24 hours. The swelling rate (in percentage) of the film surface area was determined by the following formula:

$$\text{Film swelling rate} = 100 \times \frac{\text{(area after swelling-initial area)}}{\text{(initial area).}}$$

Water resistance was measured in the form of the swelling rate of a film specimen. A film specimen measuring 2 cm X 4 cm was immersed in hot water at 70°C for 24 hours. The swelling rate of the film surface was determined by the above formula.

It can be clearly seen that the radiation-curing polyurethane emulsion compositions according to the present invention exhibit improved physical properties due to the addition of the photosensitizer and the photo-polymerization. On the other hand, the polyurethane emulsion of Comparative Example 2, which required an increased usage of the inhibitor, had a photo-polymerization velocity which was clearly retarded because of the increased usage of the inhibitor.

Experiments 9 to 11

Poly(ethylene glycol) diacrylate (a water-based reactive thinner monomer) was mixed with the radiation-curable polyurethane emulsion obtained in Example 1. Then the photosensitizer was added to the system in the same manner as described in Experiments 1 to 8, and photo-polymerization was effected in the same manner. The measured results of physical properties of the films thus obtained are shown in Table 6. The results of the above-mentioned Experiment 4 are also shown in Table 6 as an experiment in which no reactive thinner monomer was used. The methods for measuring the physical properties of Table 6 were identical to those of Experiments 1 to 8.

Table 6

| | Film | | | | Physical Properities | | | | | |
|---|---|---|---|---|---|---|---|---|---|---|
| | Radiation-induced-setting polyurethane emulsion | Quantity of reactive thinner monomer added (%) 1) | Quantity of photosensitizer added (%) 2) | Photo-cure speed (m/min) | Strength ($kg/cm^2$) | Elongation (%) | 100 % MO ($kg/cm^2$) | 200 % MO ($kg/cm^2$) | solvent resistance (%) | water resistance (%) |
| Experiment 4 | Example 1 | 0 | 1 | 5 | 350 | 500 | 110 | 210 | 60 | 5 |
| Experiment 9 | Example 2 | 10 | 1 | 5 | 400 | 540 | 150 | 300 | 50 | 4 |
| Experiment 10 | Example 3 | 20 | 1 | 5 | 450 | 210 | 280 | 440 | 40 | 3 |
| Experiment 11 | Example 1 | 30 | 1 | 5 | 500 | 130 | 430 | - | 40 | 4 |
| Comparative Experiment 3 | Example 2 | 0 | 0 | 5 | 150 | 500 | 70 | 100 | 160 | 18 |
| Comparative Experiment 4 | Example 3 | 10 | 0 | 5 | 165 | 520 | 80 | 110 | 148 | 18 |
| Comparative Experiment 5 | Comparative Example 1 | 20 | 0 | 5 | 190 | 470 | 100 | 130 | 120 | 17 |
| Comparative Experiment 6 | Comparative Example 2 | 30 | 0 | 5 | 270 | 380 | 120 | 170 | 100 | 15 |

1) Quantity of reactive thinner monomer added: Quantity of reactive thinner monomer added (%) relative to the 100 % of the solid content of each radiation-induced-setting polyurethane emulsion.

2) Quantity of photosensitizer added: Quantity of photosensitizer added (%) relative to the 100 % of the resin. The photosensitizer used was identical to that shown below Table 5.

Comparative Experiments 3 to 6

Poly(ethylene glycol) diacrylate (a water-based reactive thinner monomer) was mixed into the polyurethane emulsion of the prior art obtained in Comparative Example 3. Then the photosensitizer was added to the system in the same manner as Experiments 1 to 8. Photo-polymerization was effected in a similar manner to those of Experiments 1 to 8. The results of physical property measurements are shown in Table 6.

As shown in Table 6, more significant improvements in the physical properties were obtained when the water-based reactive thinner monomer was added to the radiation-curable polyurethane emulsion of the invention. This is interpreted as follows: As the radiation-curable polyurethane emulsions according to the invention have photo-polymerizable double bonds, cross-linking with the reactive thinner monomer used was achieved, which resulted in significant changes in physical properties due to the addition of the reactive thinner monomer.

On the other hand, when the reactive thinner monomer was added to the polyurethane emulsion of the prior art and photo-polymerization was effected, the modification was limited to molecular entanglement due to just self-copolymerization of the reactive thinner monomer since the polyurethane skeleton had no photo-polymerizable double bonds. As a result, no significant changes in physical properties occurred.

The radiation-curable polyurethane emulsion compositions according to the present invention have the following specific merits:

As they are water-based emulsions, viscosity adjustment for regulating the coated film thickness, etc. may be effected by addition of water.

From the viewpoint of production method, the polyurethane emulsions having active amino groups are made to react with the isocyanate compound having polymerizable unsaturated groups. Hence, the introduction of polymerizable unsaturated group into the polyurethane skeleton may be effected with ease even in the presence of water. Thus, there is no possibility of polymerization of polymerizable unsaturated group due to heating which poses a problem in the prior art. Hence the production method according to the invention is an extremely effective one for industrial scale applications.

As explained above, the introduction of polymerizable unsaturated groups can be made with ease in the presence of water. Thus the introduction of polymerizable unsaturated group into the polyurethane skeleton can be made after recovery of the solvent used. Hence, the method is free of the problem of gelation which is encountered in the prior art when the solvent is recovered after the introduction of polymerizable unsaturated group. The method, therefore, is very effective as a production method for industrial scale application.

**Claims**

**1.** A process for preparing a polyurethane emulsion comprising:

emulsifying and dispersing in water a urethane prepolymer having terminal isocyanate groups, the prepolymer being obtained by reacting a compound having two or more active hydrogens with an organic polyisocyanate, adding to the system a polyamine having at least two primary amino groups and at least one secondary amino group such that the molar ratio of terminal isocyanate groups of the urethane prepolymer to the primary amino groups of the polyamine is from 1/1 to 1/0.7, and allowing the system to react at a temperature of 5 to 40°C in the presence of water to obtain an emulsion of a polyurethane containing primary amino groups and/or secondary amino groups,
recovering any organic solvent, and
adding to the system an isocyanate compound containing aliphatic unsaturated groups, and allowing the system to react at a temperature of 5 to 40° in the presence of water.

**2.** A process according to claim 1, wherein the isocyanate compound containing aliphatic unsaturated groups includes at least one group selected from acryloyl, allyl and styrene groups, and at least one isocyanate group.

**3.** A process according to claim 1 or claim 2, wherein the prepolymer is obtained from a compound having two or more active hydrogens and a molecular weight from 500 to 5,000.

**4.** A process according to any one of claims 1 to 3, wherein the molar ratio of active amino groups to isocyanate groups is from 1/1.05 to 1/0.8.

## Patentansprüche

1. Verfahren zur Herstellung einer Polyurethanemulsion, umfassend:

   Emulgieren und Dispergieren eines Urethanprepolymeren mit endständigen Isocyanatgruppen in Wasser, wobei das Prepolymer durch Umsetzen einer Verbindung mit zwei oder mehreren aktiven Wasserstoffatomen mit einem organischen Polyisocyanat erhalten wird,
   Zugeben zu dem System eines Polyamins mit mindestens zwei primären Aminogruppen und mindestens einer sekundären Aminogruppe, so daß das Molverhältnis der endständigen Isocyanatgruppen des Urethanprepolymeren zu den primären Aminogruppen des Polyamins 1/1 bis 1/0.7 beträgt und Reagierenlassen des System bei einer Temperatur von 5 bis 40°C in Gegenwart von Wasser, um eine Emulsion eines Polyurethans, das primäre Aminogruppen und/oder sekundäre Aminogruppen enthält, zu erhalten,
   Rückgewinnen irgendeines organischen Lösungsmittels, und
   Zugeben zu dem System einer aliphatische, ungesättigte Gruppen enthaltenden Isocyanatverbindung und Reagierenlassen des Systems bei einer Temperatur von 5 bis 40° in Gegenwart von Wasser.

2. Verfahren nach Anspruch 1, wobei die aliphatische, ungesättigte Gruppen enthaltende Isocyanatverbindung mindestens eine aus Acryloyl-. Allyl- und Styrolgruppen gewählte Gruppe und mindestens eine Isocyanatgruppe beinhaltet.

3. Verfahren nach Anspruch 1 oder Anspruch 2, wobei das Prepolymer aus einer Verbindung erhalten wird, welche zwei oder mehrere aktive Wasserstoffatome und ein Molekulargewicht von 500 bis 5.000 aufweist.

4. Verfahren nach mindestens einem der Ansprüche 1 bis 3, wobei das Molverhältnis von aktiven Aminogruppen zu Isocyanatgruppen 1/1.05 bis 1/0,8 beträgt.

## Revendications

1. Procédé pour préparer une émulsion de polyuréthane comprenant :

   le fait d'émulsifier et de disperser dans de l'eau un prépolymère d'uréthane présentant des groupes isocyanate terminaux, le prépolymère étant obtenu par réaction d'un composé comportant deux ou plus de deux atomes d'hydrogène actifs, avec un polyisocyanate organique,
   le fait d'ajouter au système une polyamine comportant au moins deux groupes amino primaire et au moins un groupe amino secondaire, de sorte que le rapport molaire des groupes isocyanate terminaux du prépolymère d'uréthane aux groupes amino primaire de la polyamine est compris dans l'intervalle allant de 1/1 à 1/0,7, et le fait de laisser le système réagir à une température de 5 à 40° C en présence d'eau pour obtenir une émulsion d'un polyuréthane contenant des groupes amino primaire et/ou des groupes amino secondaire,
   le fait de récupérer tout solvant organique, et
   le fait d'ajouter au système un composé d'isocyanate contenant des groupes insaturés aliphatiques, et le fait de laisser le système réagir à une température de 5 à 40° C en présence d'eau.

2. Procédé conforme à la revendication 1, dans lequel le composé d'isocyanate contenant des groupes insaturés aliphatiques comprend au moins un groupe choisi parmi les groupes acryloyle, allyle et styrényle, et au moins un groupe isocyanate.

3. Procédé conforme à la revendication 1 ou 2, dans lequel on obtient le prépolymère à partir d'un composé présentant deux ou plus de deux atomes d'hydrogène actifs et une masse moléculaire de 500 à 5 000.

4. Procédé conforme à l'une quelconque des revendications 1 à 3, dans lequel le rapport molaire des groupes amino actifs aux groupes isocyanate est compris dans l'intervalle allant de 1/1,05 à 1/0,8.